(19)

Europäisches Patentamt

European Patent Office

Office européen des brevets

(11) **EP 3 866 531 A1**

(12) **DEMANDE DE BREVET EUROPEEN**

(43) Date de publication:
18.08.2021 Bulletin 2021/33

(51) Int Cl.:
*H04W 72/02* (2009.01)  *H04B 1/7105* (2011.01)
*H04B 17/309* (2015.01)  *H04B 1/69* (2011.01)

(21) Numéro de dépôt: 21154895.3

(22) Date de dépôt: 03.02.2021

(84) Etats contractants désignés:
AL AT BE BG CH CY CZ DE DK EE ES FI FR GB
GR HR HU IE IS IT LI LT LU LV MC MK MT NL NO
PL PT RO RS SE SI SK SM TR
Etats d'extension désignés:
BA ME
Etats de validation désignés:
KH MA MD TN

(30) Priorité: 17.02.2020 FR 2001531

(71) Demandeur: Commissariat à l'Energie Atomique
et aux Energies
Alternatives
75015 Paris (FR)

(72) Inventeurs:
• JIMENEZ GUIZAR, Arturo
38054 GRENOBLE CEDEX 09 (FR)
• DEPARIS, Nicolas
38054 GRENOBLE CEDEX 09 (FR)

(74) Mandataire: Marks & Clerk France
Immeuble "Visium"
22, avenue Aristide Briand
94117 Arcueil Cedex (FR)

(54) **METHODE D'ALLOCATION DE RESSOURCES POUR SYSTEME DE COMMUNICATION A ETALEMENT DE SPECTRE**

(57) Méthode d'allocation de ressources pour système de communications à étalement de spectre, comprenant une pluralité de dispositifs communicants aptes à communiquer avec un serveur via au moins une passerelle d'accès réseau, la méthode comprenant les étapes de :
- Mesurer (301), pour chaque dispositif communicant, sur une fenêtre temporelle donnée, une métrique de qualité du lien de communication,
- Déterminer (302) au moins un indicateur statistique du rapport signal à interférence entre chaque couple de dispositifs communicants à partir de la métrique de qualité,
- Allouer (304) à chaque dispositif communicant un facteur d'étalement et au moins un slot temporel pour communiquer, selon un critère de coexistence (303) fonction du facteur d'étalement et de l'indicateur statistique du rapport signal à interférence,
- les ressources temporelles étant organisées sous la forme de super trames comprenant des premiers slots de communication dans lesquels plusieurs dispositifs peuvent communiquer simultanément en utilisant des facteurs d'étalement différents et des seconds slots de communication dans lesquels plusieurs dispositifs peuvent communiquer séquentiellement en utilisant le même facteur d'étalement,
- les premiers slots de communication étant alloués aux dispositifs qui respectent le critère de coexistence (303),
- les seconds slots de communication étant alloués aux dispositifs qui ne respectent pas le critère de coexistence (303).

FIG.3

EP 3 866 531 A1

**Description**

L'invention concerne le domaine des systèmes de communication à étalement de spectre, en particulier les systèmes utilisant un étalement de spectre avec des propriétés d'orthogonalité limitées qui peuvent présenter un niveau d'interférence entre eux non négligeable.

L'invention s'applique notamment aux systèmes de communication qui respectent la forme d'onde Lora™ ou de manière générale à tout système à étalement de spectre, basé sur une modulation à balayage de fréquence ou « Chirp Spread Spectrum » en anglais.

L'invention porte sur une méthode d'allocation de ressources pour de tels systèmes de communication, la méthode ayant pour objectif de prendre en compte une analyse statistique de métriques liées à la propagation des signaux utilisant des facteurs d'étalement différents au sein du système.

Dans un système de communication à étalement de spectre, plusieurs utilisateurs peuvent communiquer simultanément en utilisant des codes d'étalement ou des facteurs d'étalement différents. Ainsi, les ressources fréquentielles et/ou temporelles peuvent être partagées sans que les différents signaux émis simultanément par différents utilisateurs n'interfèrent entre eux.

Ce principe n'est cependant vérifié que lorsque les codes d'étalement utilisés sont rigoureusement orthogonaux entre eux, permettant ainsi d'avoir un niveau d'interférence mutuelle faible.

Cependant, certaines techniques d'étalement de spectre utilisent des codes quasi orthogonaux qui ne présentent pas un niveau d'interférence mutuelle toujours compatible de communications simultanées. C'est le cas notamment des techniques d'étalement de spectre par modulation à balayage en fréquence ou « Chirp Spread Spectrum » en anglais (CSS). Cette technologie est notamment utilisée dans la forme d'onde LoRa™.

Les méthodes d'étalement de spectre CSS sont basées non pas sur des codes d'étalement mais sur des facteurs d'étalement qui correspondent à différentes durées de symboles modulés.

Selon le niveau d'interférence mutuelle ou rapport signal à interférence entre deux ou plusieurs signaux modulés avec des facteurs d'étalement, la coexistence des signaux n'est pas toujours possible.

Ce constat est à la base de la présente invention qui vise à proposer une nouvelle solution d'allocation de ressources qui prend en compte les facteurs d'étalement et l'analyse statistique de métriques caractéristiques des signaux en réception pour établir la stratégie d'allocation la plus optimale.

Les documents [1] et [2] décrivent des méthodes d'allocation de ressources pour des formes d'onde de type LoRa™ pour des communications massives. Les méthodes proposées dans ces documents ne tiennent pas compte des variations du canal de propagation qui influent sur les interférences mutuelles entre signaux modulés avec des facteurs d'étalement différents.

La présente invention propose une méthode d'allocation de ressources radio qui prend en compte une analyse statistique de la propagation de signaux modulés avec des facteurs d'étalement différents.

La méthode est basée sur une allocation de super-trame qui comprend plusieurs slots temporels successifs pour chaque facteur d'étalement. Les slots temporels ayant un recouvrement temporel partiel étant alloués à des utilisateurs qui présentent un niveau d'interférence mutuelle acceptable tandis que les slots temporels séquentiels sont alloués aux utilisateurs qui sont susceptibles d'interférer avec d'autres.

La stratégie d'allocation prend en compte une estimation du rapport signal à interférence entre chaque couple de signaux émis par au moins deux utilisateurs au sein du système de communication.

L'invention permet d'adapter l'allocation des ressources radio aux variations des canaux de propagation et à limiter les interférences mutuelles entre signaux. Ainsi, elle permet de garantir une plus grande fiabilité des liens radios et une optimisation sur l'utilisation du spectre.

L'invention a pour objet une méthode d'allocation de ressources pour système de communications à étalement de spectre, comprenant une pluralité de dispositifs communicants aptes à communiquer avec un serveur via au moins une passerelle d'accès réseau, la méthode comprenant les étapes de :

- Mesurer, pour chaque dispositif communicant, sur une fenêtre temporelle donnée, une métrique de qualité du lien de communication,

- Déterminer au moins un indicateur statistique du rapport signal à interférence entre chaque couple de dispositifs communicants à partir de la métrique de qualité,

- Allouer à chaque dispositif communicant un facteur d'étalement et au moins un slot temporel pour communiquer, selon un critère de coexistence fonction du facteur d'étalement et de l'indicateur statistique du rapport signal à interférence,

- les ressources temporelles étant organisées sous la forme de super trames comprenant des premiers slots de communication dans lesquels plusieurs dispositifs peuvent communiquer simultanément en utilisant des facteurs d'étalement différents et des seconds slots de communication dans lesquels plusieurs dispositifs peuvent communiquer séquentiellement en utilisant le même facteur d'étalement,

- les premiers slots de communication étant alloués aux dispositifs qui respectent le critère de coexistence,

- les seconds slots de communication étant alloués aux dispositifs qui ne respectent pas le critère de coexistence.

Selon une variante de réalisation, la méthode comprend les étapes de :

- Trier les dispositifs communicants dans une liste selon la métrique de qualité de lien,

- Allouer au premier dispositif de la liste un premier slot temporel et un premier facteur d'étalement,

- Pour chaque autre dispositif de la liste, allouer au dispositif le premier slot temporel disponible en parcourant la super trame dans le sens croissant des temps et des valeurs de facteur d'étalement, pour lequel le dispositif respecte le critère de coexistence avec chacun des autres dispositifs autorisés à communiquer dans un slot temporel ayant un recouvrement temporel avec ledit premier slot temporel disponible.

Selon un aspect particulier de l'invention, le système de communications met en œuvre une technique d'étalement de spectre à codes pseudo-orthogonaux, par exemple de type « Chirp Spread Spectrum ».
Selon un aspect particulier de l'invention, la métrique de qualité de lien est une métrique de rapport signal à bruit ou de puissance du signal reçu.
Selon un aspect particulier de l'invention, le système de communications respecte une technologie de type LoRa™.
Selon un aspect particulier de l'invention, le critère de coexistence est déterminé au moyen des étapes de :

- Calculer une probabilité de coexistence entre deux dispositifs en estimant la probabilité que le rapport signal à interférence soit supérieur à un premier seuil donné, à partir de l'indicateur statistique,

- Comparer la probabilité de coexistence à un second seuil donné,

- Conclure à la possible coexistence des deux dispositifs si leur probabilité de coexistence est supérieure audit second seuil.

Selon un aspect particulier de l'invention, le premier seuil est un seuil de rapport signal à interférence fonction des facteurs d'étalement des deux dispositifs.
Selon un aspect particulier de l'invention, l'au moins un indicateur statistique du rapport signal à interférence est une moyenne et un écart type ou une variance.
Selon un aspect particulier de l'invention, la distribution statistique du rapport signal à interférence suit une loi normale et la probabilité de coexistence est déterminée en

- Déterminant une approximation de la distribution statistique du rapport signal à interférence à partir de la moyenne, l'écart type et un paramètre caractéristique du niveau de coexistence,

- Comparant ladite approximation au premier seuil.

Selon un aspect particulier de l'invention, la moyenne du rapport signal à interférence est déterminée en calculant la différence entre les moyennes respectives de la métrique de qualité de lien de deux dispositifs.
Selon un aspect particulier de l'invention, la variance du rapport signal à interférence est déterminée en calculant la somme entre les variances respectives de la métrique de qualité de lien de deux dispositifs.
Dans une variante de réalisation, la méthode selon l'invention comprend en outre une étape d'allocation d'un canal fréquentiel à chaque dispositif communicant.
L'invention a aussi pour objet un programme d'ordinateur comportant des instructions pour l'exécution du procédé selon l'invention, lorsque le programme est exécuté par un processeur et un système de communication comprenant un organe d'allocation de ressources configuré pour exécuter la méthode d'allocation de ressources selon l'invention.
D'autres caractéristiques et avantages de la présente invention apparaîtront mieux à la lecture de la description qui suit en relation aux dessins annexés suivants.

[Fig. 1] la figure 1 représente un schéma d'un système de communication à étalement de spectre, par exemple respectant la forme d'onde Lora™,

[Fig. 2] la figure 2 représente, sur plusieurs diagrammes, une illustration du phénomène d'interférence entre deux signaux modulés avec des facteurs d'étalement différents,

[Fig. 3] la figure 3 représente, sur un organigramme, les principales étapes de mise en œuvre d'une méthode d'allocation de ressources selon l'invention dans un système du type décrit à la figure 1,

[Fig. 4] la figure 4 représente un schéma d'une super-trame comprenant plusieurs slots temporels alloués aux utilisateurs du système en utilisant la méthode d'allocation de ressources selon l'invention,

[Fig. 5a] la figure 5a représente deux distributions de rapport signaux à bruit selon une loi normale,

[Fig. 5b] la figure 5b représente deux distributions de rapport signaux à interférence obtenues à partir des distributions données à la figure 5a,

[Fig. 5c] la figure 5c représente une probabilité de coexistence de deux dispositifs en fonction du rapport signal à interférence entre les deux liaisons de communication établies par ces deux dispositifs avec une passerelle d'accès à un réseau,

[Fig. 6a] la figure 6a représente un premier exemple d'allocation de slots au sein d'une super trame,

[Fig. 6b] la figure 6b représente un second exemple d'allocation de slots au sein d'une super trame avec trois canaux et trois valeurs de facteur d'étalement,

[Fig. 7a] la figure 7a représente schématiquement différentes phases d'un protocole de communication utilisant la méthode d'allocation de ressources selon l'invention,

[Fig. 7b] la figure 7b représente une première phase d'initialisation,

[Fig. 7c] la figure 7c représente une deuxième phase de calcul des allocations,

[Fig. 7d] la figure 7d représente une troisième phase de transmission des choix d'allocation aux nœuds du réseau,

[Fig. 7e] la figure 7e représente une quatrième phase de communication dans laquelle l'attribution des facteurs d'étalement, slots et canaux suit l'allocation prévue par l'invention.

L'invention est décrite dans le contexte de la forme d'onde LoRa™ qui utilise un étalement de spectre de type CSS. Sans perte de généralité, l'invention s'applique également à d'autres formes d'ondes qui mettent en œuvre une technique d'étalement de spectre utilisant des codes d'étalement qui ne sont pas parfaitement orthogonaux.

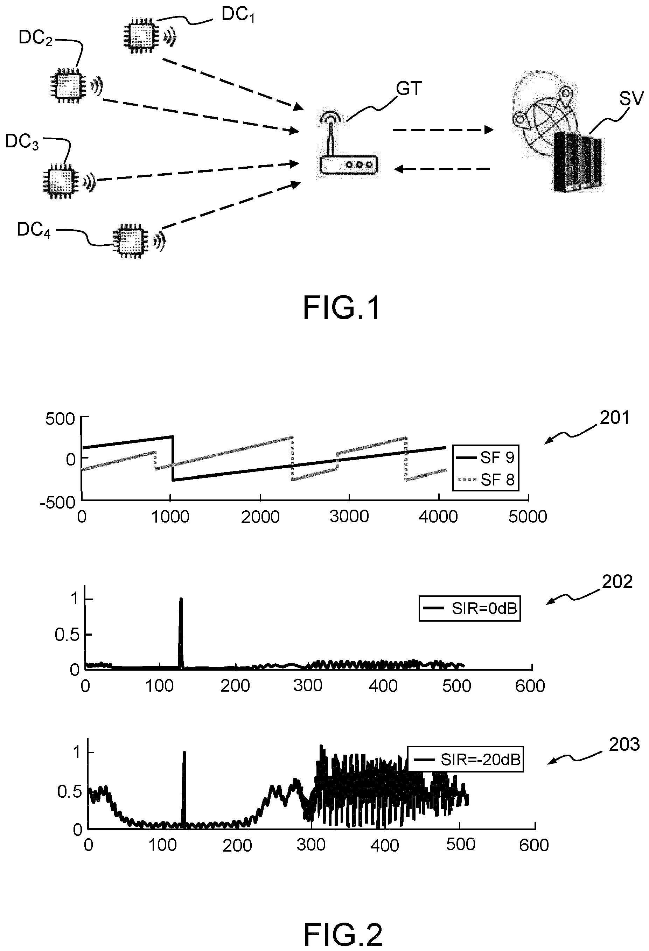

La figure 1 schématise un exemple de système de communications pour lequel l'invention s'applique. Plusieurs dispositifs communicants DC1,DC2,DC3,DC4 (objets connectés, terminaux, capteurs ou autres) établissent des liaisons de communications avec un serveur SV via au moins une passerelle d'accès réseau GT.

Chaque dispositif communicant est configuré pour établir une communication en utilisant un facteur d'étalement donné parmi plusieurs facteurs d'étalements.

La modulation utilisée est de type modulation à balayage en fréquence (CSS) tel que spécifié par la forme d'onde LoRa™. Le principe de l'étalement de spectre CSS est notamment décrit dans la référence [3].

En résumé, ce type d'étalement de spectre utilise des signaux dits « chirps » qui sont des signaux modulés en fréquence avec une fréquence variant linéairement dans la bande de fréquence. Des décalages circulaires temporels sont appliqués afin de caractériser chaque symbole. Le nombre total de symboles est égal à $2^{SF}$ où SF est le facteur d'étalement. La forme d'onde LoRa utilise typiquement des facteurs d'étalement compris entre 6 et 12.

L'invention s'applique notamment dans le cadre de communications dites massives en environnements contraints. Autrement dit, le système de communications doit être capable de gérer un très grand nombre de liaisons de communications entre le serveur SV et un ensemble de dispositifs. Il doit être capable de fonctionner dans un environnement « indoor », c'est-à-dire à l'intérieur d'un bâtiment et ainsi prendre en compte les variations du canal de propagation qui est perturbé notamment par les multi-trajets des signaux issus de réflexions sur des obstacles.

Dans ce contexte, un inconvénient des modulations CSS est que les signaux modulés avec des facteurs d'étalement différents ne sont pas parfaitement orthogonaux, ce qui peut engendrer de l'interférence mutuelle selon les puissances respectives des deux signaux. Ce phénomène est expliqué dans le document [3].

La figure 2 illustre, sur plusieurs diagrammes, le phénomène d'interférence mutuelle entre deux signaux modulés avec deux facteurs d'étalement différents, SF=8 et SF=9 respectivement. Les diagrammes de la figure 2 sont repris du document de l'état de l'art [3].

Le diagramme 201 de la figure 2 représente deux signaux respectivement modulés avec les facteurs d'étalement SF=8 et SF=9.

Le diagramme 202 de la figure 2 représente les deux signaux démodulés en réception lorsque le rapport signal à interférence entre les deux signaux est de 0dB. Autrement dit, les deux signaux sont reçus avec la même puissance. Le diagramme 202 est un diagramme fréquentiel sur lequel on retrouve un pic de fréquence P qui correspond au numéro du symbole modulé du premier signal (SF=9). La détection de ce pic en fréquence permet de démoduler correctement le symbole. Le signal interférent (SF=8) est vu du récepteur comme une forme d'onde CSS ce qui produit dans le domaine fréquentiel un signal à large bande avec une faible densité spectrale qu'on peut observer sur la droite du diagramme 202 entre les abscisses 300 et 500. Sur le diagramme 202, on remarque que le signal interférent ne gêne pas la détection du pic d'amplitude P et que donc les deux signaux peuvent coexister sans interférence mutuelle.

Le diagramme 203 de la figure 2 représente les mêmes signaux démodulés en réception mais cette fois avec un rapport signal à interférence égal à -20dB. Dans ce cas, le signal interférent (SF=8) est beaucoup plus fort que le signal utile (SF=9) ce qui engendre après démodulation un niveau d'interférence élevé qui ne permet plus de détecter correctement le pic d'amplitude P. En effet, de fausses détections peuvent apparaitre dues à l'interférence.

On voit donc que selon le rapport signal à interférence, deux signaux modulés avec des facteurs d'étalement différents peuvent coexister simultanément ou non. Ce phénomène est décrit en détail dans la référence [3]. L'invention propose une méthode d'allocation de ressources qui exploite cette particularité de quasi orthogonalité des signaux à étalement de spectre CSS.

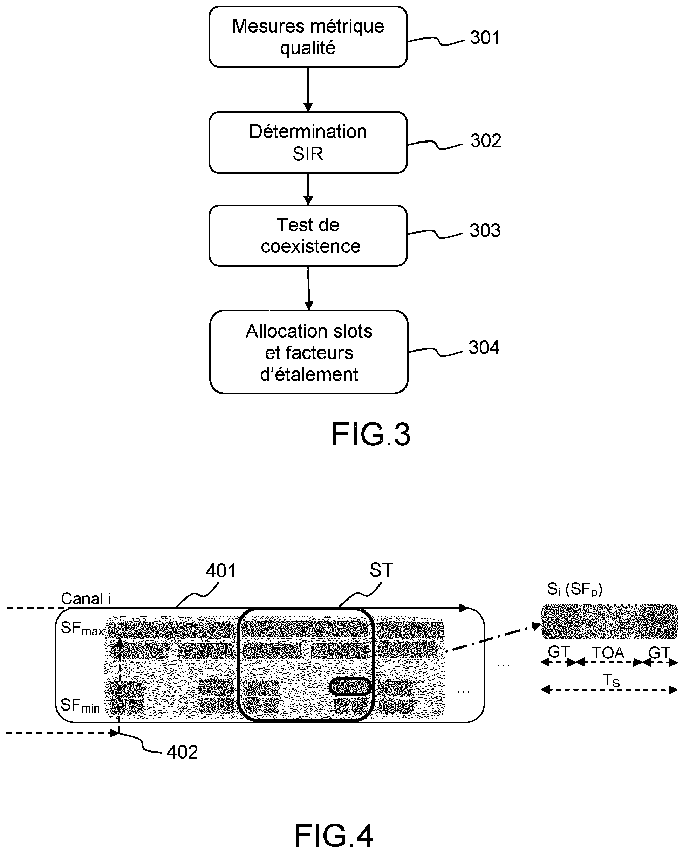

La figure 3 détaille les principales étapes de la méthode d'allocation de ressources selon l'invention.

La figure 4 schématise un exemple de super trame comprenant plusieurs slots temporels allouables à des utilisateurs pour communiquer.

Une super trame ST est décomposée en slots temporels $S_i(SF_P)$. Pour chaque valeur différente $SF_P$ de facteur d'étalement, un ou plusieurs slots temporels successifs sont prévus dans la super trame. Précisément, le nombre de slots attribués à chaque valeur de facteur d'étalement est prédéfini car la durée d'un symbole modulé dépend du facteur d'étalement. Le nombre de slots dans une super trame est divisé par deux à chaque fois que le facteur d'étalement est incrémenté de 1.

Pour des valeurs différentes de facteur d'étalement, les slots qui présentent un recoupement temporel sont prévus pour être utilisés simultanément par différents utilisateurs. Autrement dit, sur la figure 4, l'axe horizontal 401 correspond à des slots temporels alloués successivement pour une même valeur de facteur d'étalement. L'axe vertical 402 correspond à des slots temporels alloués simultanément à des utilisateurs avec des valeurs de facteur d'étalement différentes.

Le motif de super trame ST est répété temporellement et peut aussi être répété fréquentiellement pour différents canaux fréquentiels i.

Le principe de la méthode selon l'invention consiste à attribuer les slots temporels simultanés aux dispositifs qui présentent la meilleure probabilité de coexistence tandis que les slots temporels séquentiels sont réservés aux dispositifs qui ont une faible probabilité de coexistence.

Par probabilité de coexistence, on entend une probabilité de démoduler correctement chaque signal transmis via un slot temporel alloué, malgré les interférences potentielles générées par d'autres signaux transmis simultanément avec des facteurs d'étalement différents.

La méthode selon l'invention consiste ainsi à :

- mesurer un ensemble de métriques de qualité de liens pour différents liens de communications utilisant différents facteurs d'étalement (étape 301),

- estimer une statistique de rapport signaux à interférence entre les différents liens (étape 302),

- déterminer un test de coexistence entre les différents dispositifs communicants au sein du réseau (étape 303),

- allouer les slots d'une super trame et les facteurs d'étalement associés aux dispositifs en prenant en compte leur probabilité de coexistence.

La première étape 301 de la méthode consiste à collecter un ensemble de métriques de qualité de liens lors d'une phase d'initialisation. Pendant cette phase, différents dispositifs communiquent avec le serveur SV en utilisant différents facteurs d'étalement. Des métriques de qualité des différents liens de communication sont collectées (par exemple au niveau de chaque passerelle réseau) et transmises au serveur pour analyse. Pour chaque dispositif i, un vecteur de métriques est obtenu sur une durée temporelle prédéterminée $I_i = [I_i(t)\ I_i(t-1)\ I_i(t-2)\ ...\ I_i(t-n)]$. Les métriques correspondent à des mesures de rapport signal à bruit ou de puissance du signal reçu.

A partir de ces informations, le serveur SV calcule un vecteur $L = [[\hat{\imath}_i\ \sigma_{l,i}]\ |\ i = [1\ ...\ N_D]$ qui contient la moyenne et la variance (ou écart type) des métriques de qualité de lien pour chaque dispositif i.

e vecteur est utilisé en entrée de la phase suivante de calcul des allocations.

Il est trié par ordre croissant ou décroissant de sorte que le premier élément du vecteur correspond au dispositif qui présente la meilleure qualité de lien, c'est-à-dire le rapport signal à bruit le plus élevé ou la puissance de signal reçu la plus élevée.

La méthode d'allocation est appliquée au vecteur trié en déterminant successivement la meilleure allocation pour chaque dispositif du vecteur trié.

Le principe général de l'invention est le suivant. Le dispositif qui présente la meilleure métrique de qualité de lien reçoit le premier slot temporel et la première valeur de facteur d'étalement (la valeur la plus faible). Ensuite, on applique un test de coexistence au deuxième dispositif en incrémentant de 1 la valeur de facteur d'étalement. Si le deuxième dispositif peut coexister avec le premier dispositif, on lui alloue le premier slot temporel disponible pour la deuxième valeur de facteur d'étalement sinon on lui alloue le second slot temporel pour la première valeur de facteur d'étalement.

L'objectif de la méthode est d'optimiser la coexistence des dispositifs pour allouer au mieux les slots temporels simultanés avec des facteurs d'étalement différents.

L'étape 302 suivante consiste à estimer un indicateur statistique du rapport signal à interférence pour chaque couple de dispositifs du vecteur L trié.

Pour cela, on considère que les valeurs des métriques de qualité de lien (rapport signal à bruit ou puissance du signal reçue) sont des variables aléatoires indépendantes qui suivent une distribution de probabilités avec moyenne $\hat{\imath}$ et écart-type $\sigma$.

Les valeurs de rapport signaux à interférence $SIR_{i,j}$ sont aussi des variables aléatoires qui suivent la même loi. En particulier, si ces variables suivent une distribution normale, leur moyenne est égale à la différence des moyennes

$$\sigma_{i,j} = \sqrt{\sigma_i^2 + \sigma_j^2}.$$

des métriques de qualité de lien respectives des dispositifs i et j : $\hat{\imath}_{i,j} = \hat{\imath}_i - \hat{\imath}_j$ et avec un écart-type

Par ailleurs, $\hat{\imath}_{i,j} = -\hat{\imath}_{j,i}$ et $\sigma_{i,j} = \sigma_{j,i}$.

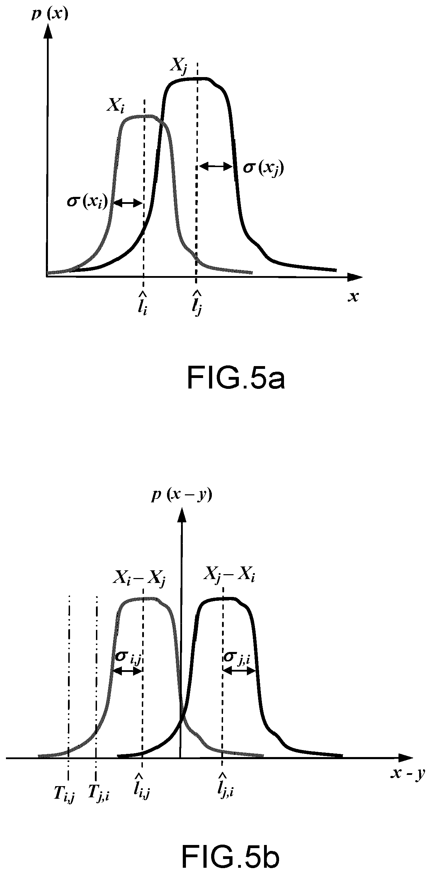

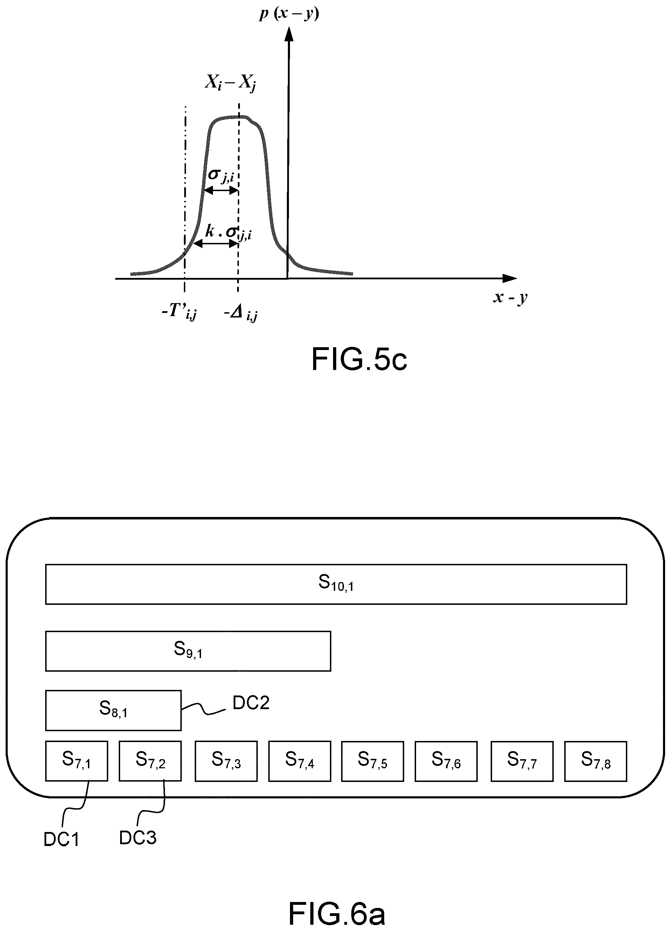

Les figures 5a,5b et 5c illustrent le calcul d'une probabilité de coexistence entre deux dispositifs i et j à partir des statistiques du vecteur L.

La figure 5a représente les distributions respectives des valeurs de qualité de lien $X_i$ et $X_j$ pour deux dispositifs i et j. Ces deux distributions sont caractérisées par leurs moyennes et leurs écarts types.

La figure 5b représente les distributions $X_i$-$X_j$ et $X_j$-$X_i$ des valeurs de rapports signaux à interférence $SIR_{i,j}$ définies comme la différence des deux distributions données à la figure 5a.

La figure 5c représente la probabilité de coexistence de deux dispositifs i et j. Les distributions des variables $SIR_{i,j}$ et $SIR_{j,i}$ sont symétriques. La probabilité de coexistence des dispositifs i et j peut être définie comme la probabilité que l'une de ces distributions dépasse un seuil prédéfini $T'_{i,j}$.

$$P_{coexistence}(x - y) = \int_{-T'_{i,j}}^{\infty} p(x - y)d(x - y)\ (1)$$

Le seuil $T'_{i,j}$ est, par exemple, défini comme $T'_{i,j} = \min(|T_{i,j}|, |T_{j,i}|)$.

Les seuils $T_{i,j}$ et $T_{j,i}$ dépendent du facteur d'étalement SF utilisé et correspondent aux seuils de rapports SIR en dessous desquels il n'est plus possible de démoduler le signal utile.

Les valeurs des $T_{i,j}$ et $T_{j,i}$ sont données dans la référence [3] et reprises dans le tableau ci-dessous.

## [Tableau 1]

| $SF_{int}$ / $SF_{ref}$ | 6 | 7 | 8 | 9 | 10 | 11 | 12 |
|---|---|---|---|---|---|---|---|
| 6 | 0 | -8 | -10 | -11 | -11 | -11 | -11 |
| 7 | -11 | 0 | -11 | -13 | -14 | -14 | -14 |
| 8 | -14 | -13 | 0 | -14 | -16 | -17 | -17 |
| 9 | -17 | -17 | -16 | 0 | -17 | -19 | -20 |
| 10 | -19 | -19 | -19 | -19 | 0 | -20 | -22 |
| 11 | -22 | -22 | -22 | -22 | -22 | 0 | -23 |
| 12 | -24 | -24 | -24 | -25 | -25 | -25 | 0 |

Ainsi, l'étape 303 de la méthode selon l'invention consiste à calculer, pour chaque couple de dispositifs (i,j) une probabilité de coexistence telle que définie par la relation (1) en fonction des valeurs de facteur d'étalement.

Le test de coexistence consiste à conclure à la coexistence possible de deux dispositifs lorsque la probabilité calculée dépasse un certain seuil, par exemple 68%, 95% ou 99% selon la tolérance visée.

Dans un mode de réalisation particulier de l'invention, on prend l'hypothèse que les distributions statistiques des métriques de qualité de liens suivent une loi normale. Dans ce cas, le test de coexistence 303 est obtenu en appliquant la relation suivante :

$$\min\left(\left|T_{i,j}\right|, \left|T_{j,i}\right|\right) > k \cdot \sigma_{i,j} + \Delta_{i,j} \quad (2)$$

k est un nombre réel positif compris entre 1 et 3 et qui permet de définir le seuil de coexistence (68%, 95% ou 99%).

La dernière étape 304 de la méthode consiste à allouer les slots temporels d'une super trame aux dispositifs dans l'ordre du vecteur L trié en appliquant à chaque étape un test de coexistence.

L'allocation des slots débute en allouant la plus faible valeur de facteur d'étalement et le premier slot temporel au premier dispositif du vecteur L trié.

Ensuite, pour chaque dispositif suivant dans le vecteur L, on essaie d'allouer en priorité des slots temporels simultanés à ceux déjà alloués mais en utilisant une nouvelle valeur de facteur d'étalement. Pour allouer un slot temporel simultané, on réalise un test de coexistence entre le nouveau dispositif et ceux auxquels on a alloué les slots simultanés avec d'autres valeurs de facteur d'étalement. Si le test de coexistence est positif, le slot peut être alloué au dispositif sinon on passe au slot temporel suivant en parcourant la super trame dans l'ordre temporel.

La figure 6a illustre le mécanisme d'allocation de slots selon l'invention pour un exemple particulier.

La méthode débute en allouant le premier slot $S_{7,1}$ du premier facteur d'étalement (SF7) au premier dispositif DC1 de la liste.

Ensuite, pour le deuxième dispositif DC2, on vérifie s'il peut coexister avec le premier dispositif DC1 via le test de coexistence. Si c'est le cas, on lui alloue le premier slot temporel $S_{8,1}$ du deuxième facteur d'étalement (SF8). Comme on peut le voir sur la figure 6a, les slots $S_{7,1}$ et $S_{8,1}$ présentent un recouvrement temporel de durée égale à celle du slot $S_{7,1}$.

Pour l'allocation du troisième dispositif DC3, on teste d'abord si il est possible de lui allouer le premier slot temporel du troisième facteur d'étalement $S_{9,1}$. Pour cela, on effectue un test de coexistence entre le troisième dispositif DC3 et chacun des deux précédents dispositifs DC1, DC2 puisque le slot $S_{9,1}$ présente un recouvrement temporel à la fois avec le slot $S_{8,1}$ et le slot $S_{7,1}$.

Si DC3 peut coexister avec DC2 mais pas avec DC1, alors on lui alloue le slot $S_{7,2}$. Si DC3 ne peut coexister avec aucun des deux dispositifs DC1,DC2, alors on lui alloue le slot $S_{7,3}$.

La méthode se poursuit pour chaque dispositif de la liste en privilégiant toujours en premier lieu l'attribution d'un nouveau facteur d'étalement disponible et d'un slot permettant de communiquer simultanément avec d'autres dispositifs.

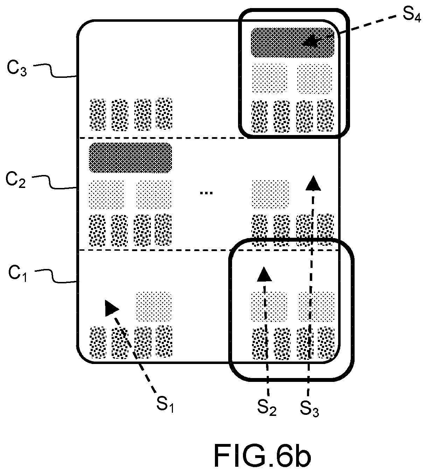

La figure 6b schématise un exemple de super trame pour trois canaux fréquentiels C1,C2,C3 distincts.

Dans cet exemple, les slots S1,S2,S3 sont restés libres car aucune coexistence n'a été possible avec le ou les dispositifs qui utilisent des slots simultanément.

Le dernier dispositif de la liste L est attribué au slot S4 qui correspond au dernier slot temporel avec le facteur d'étalement le plus élevé.

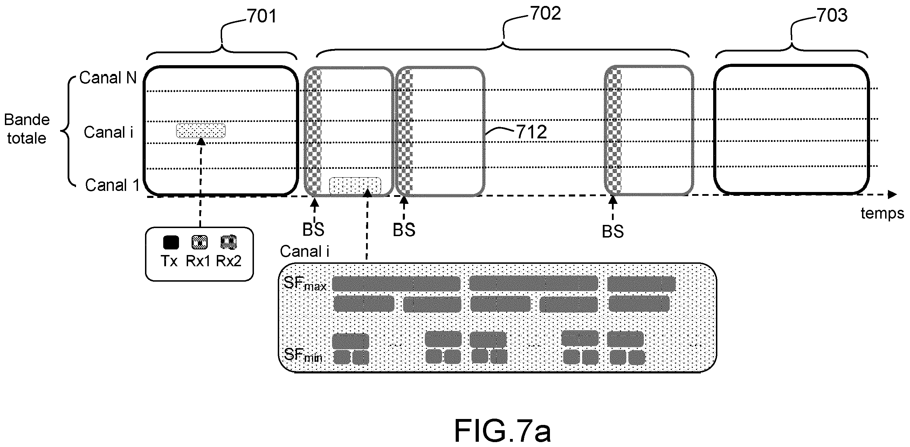

Les figures 7a à 7e décrivent un exemple de protocole de communication selon l'invention.

Le protocole de communication comprend une première phase d'initialisation, une deuxième phase de calcul des allocations de ressources, une troisième phase de transmission des informations d'allocations de ressources et une quatrième phase de communication.

La figure 7a schématise une planification des ressources temporelles et fréquentielles utilisées lors de chaque phase. De manière générale, la bande de fréquence totale est subdivisée en N canaux. Lors de la phase d'initialisation et de transmission des informations d'allocations de ressources, les ressources de communication 701 sont organisées sous forme d'accès aléatoire comprenant un slot d'émission Tx et deux slots de réception Rx1,Rx2, pour échanger des informations entre un dispositif communicant et le serveur.

Lors de la phase de communication, les ressources 702 sont organisées sous forme de super trames, chaque super trame 712 comprenant une balise de synchronisation BS puis un ensemble de slots temporels organisés de la façon décrite à la figure 4.

Une nouvelle phase d'initialisation et de calcul des allocations 703 peut intervenir périodiquement ou suite à un événement, par exemple suite à une variation importante des conditions de propagation du canal de transmission.

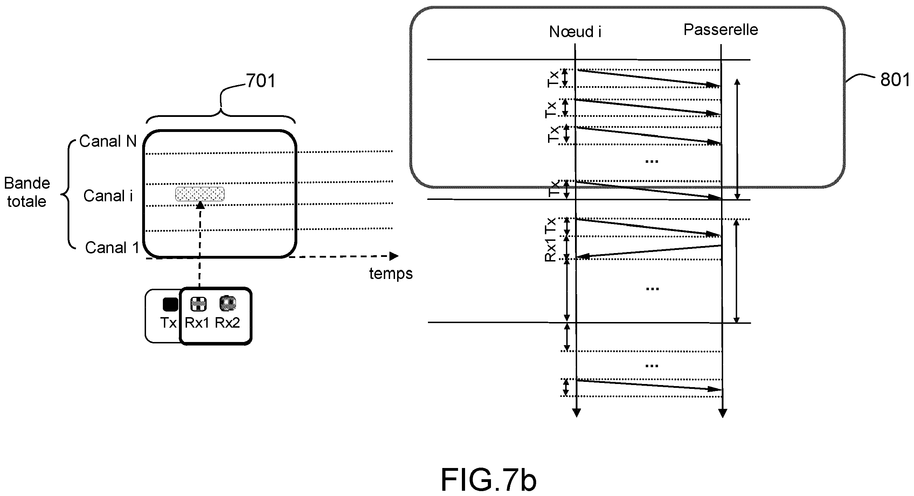

La figure 7b schématise (sur la droite de la figure) la première phase d'initialisation 801 qui consiste à collecter des métriques de qualité des différents liens de communication. Autrement dit, lors de cette phase, chaque dispositif DC1,DC2,DC3,DC4 transmet à la passerelle GT les informations $I_i(t)$ pendant une durée prédéterminée. Les métriques $I_i(t)$ sont transmises via les slots Tx.

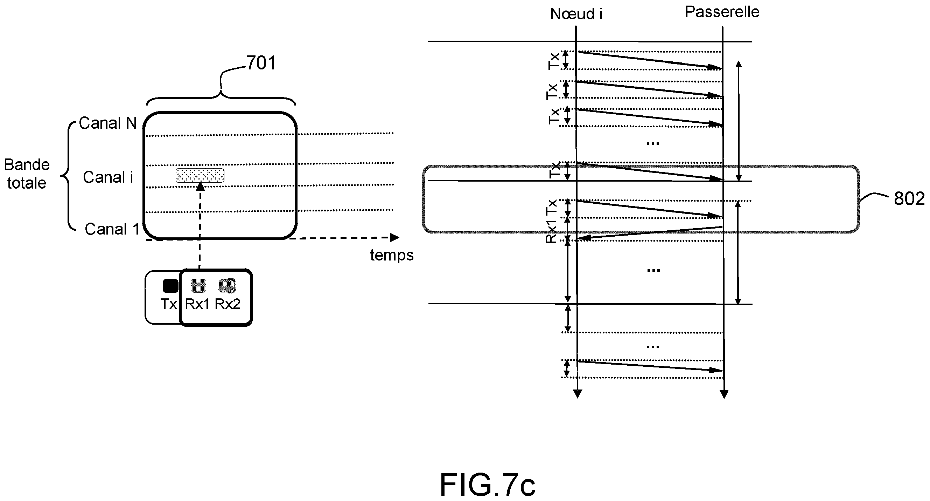

La figure 7c schématise (sur la droite de la figure) la deuxième phase 802 de calcul des allocations par le serveur. Cette deuxième phase consiste à appliquer la méthode d'allocation de ressources décrite à la figure 3 à partir des métriques $I_i(t)$ collectées pendant la phase d'initialisation 801.

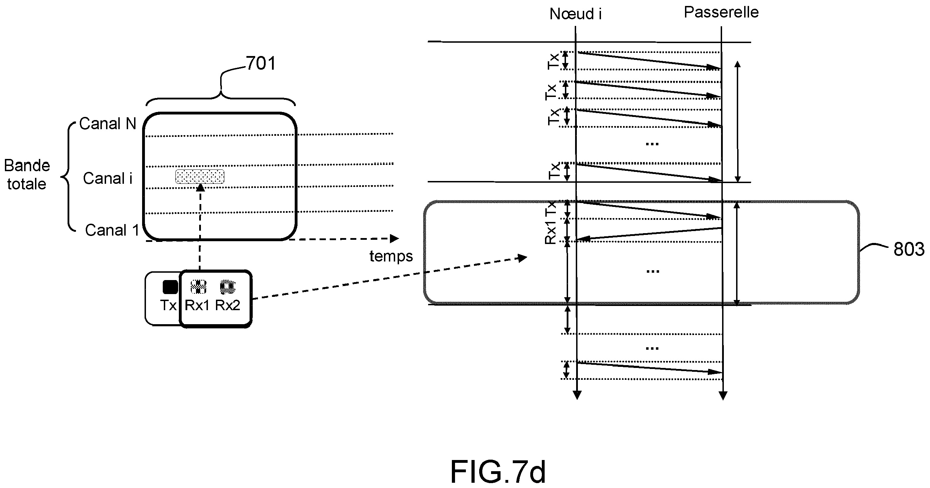

La figure 7d schématise (sur la droite de la figure) la troisième phase 803 de transmission des allocations calculées vers les dispositifs DC1,DC2,DC3,DC4. Lors de cette phase, le serveur SV envoie, via la passerelle GT, un message de réponse via les slots RX1 ou RX2, à chaque dispositif DC1,DC2,DC3,DC4 pour lui communiquer ses paramètres de transmission, à savoir son facteur d'étalement et les slots temporels dans lesquels il est autorisé à communiquer.

Le serveur attend la prochaine fenêtre de réception RX1 ou RX2 de chaque dispositif pour lui envoyer ses paramètres d'allocation.

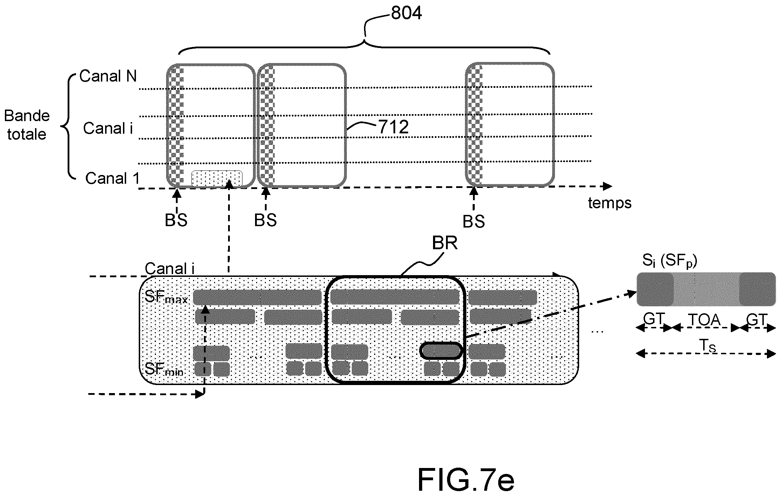

Les dispositifs communicants reconfigurent ensuite leurs paramètres puis ils passent dans un mode veille en attendant la prochaine balise de synchronisation qui initialise la quatrième phase de communication 804 (voir figure 7e).

Lors de la phase de communication 804, les dispositifs communiquent avec le serveur en suivant la stratégie d'allocation établie. La phase de communication est définie par une super-trame 712 qui démarre avec une balise de synchronisation BS. Chaque super-trame est composée de plusieurs slots temporels pour chaque facteur d'étalement SF, afin d'exploiter la pseudo-orthogonalité des signaux. Il peut y avoir plusieurs super-trames pendant la phase de communication 804.

Les slots utilisant le même facteur d'étalement sont planifiés séquentiellement tandis que les slots utilisant des facteurs d'étalement différents sont planifiés simultanément pour former un bloc de ressources BR. La taille d'un bloc de ressources BR dépend du facteur d'étalement SF. La configuration d'allocation est utilisée sur plusieurs canaux fréquentiels indépendants.

Ainsi, lors de la phase de communication 804, chaque dispositif se réveille pendant le slot temporel qui lui est alloué dans la super-trame pour transmettre ses données selon la stratégie d'ordonnancement calculée par le serveur lors de la phase de calcul 802.

Bien que l'invention ait été décrite dans le contexte d'une seule passerelle réseau GT, le système de communication envisagé peut comprendre plusieurs passerelles réseau chacune étant associée à un groupe de dispositifs.

L'invention s'applique avantageusement aux systèmes de communication respectant la forme d'onde LoRa™ mais s'applique aussi à tout autre système à étalement de spectre pour lequel les codes d'étalement utilisés ne sont pas orthogonaux.

Références

[1] J. Haxhibeqiri, I. Moerman and J. Hoebeke, "Low Overhead Scheduling of LoRa Transmissions for Improved Scalability," in IEEE Internet of Things Journal, vol. 6, no. 2, pp. 3097-3109, April 2019

[2] Abdelfadeel, Khaled Q. et al. "FREE - Fine-grained Scheduling for Reliable and Energy Efficient Data Collection in LoRaWAN.", ArXiv abs/1812.05744, 2018

[3] D. Croce, M. Gucciardo, S. Mangione, G. Santaromita and I. Tinnirello, "Impact of LoRa Imperfect Orthogonality: Analysis of Link-Level Performance," in IEEE Communications Letters, vol. 22, no. 4, pp. 796-799, April 2018

**Revendications**

1. Méthode d'allocation de ressources pour système de communications à étalement de spectre, comprenant une pluralité de dispositifs communicants (DC1,DC2,DC3,DC4) aptes à communiquer avec un serveur (SV) via au moins une passerelle d'accès réseau (GT), la méthode comprenant les étapes de :

   - Mesurer (301), pour chaque dispositif communicant, sur une fenêtre temporelle donnée, une métrique de qualité du lien de communication,
   - Déterminer (302) au moins un indicateur statistique du rapport signal à interférence entre chaque couple de dispositifs communicants à partir de la métrique de qualité,
   - Allouer (304) à chaque dispositif communicant un facteur d'étalement et au moins un slot temporel pour communiquer, selon un critère de coexistence (303) fonction du facteur d'étalement et de l'indicateur statistique du rapport signal à interférence,
   - les ressources temporelles étant organisées sous la forme de super trames comprenant des premiers slots de communication dans lesquels plusieurs dispositifs peuvent communiquer simultanément en utilisant des facteurs d'étalement différents et des seconds slots de communication dans lesquels plusieurs dispositifs peuvent communiquer séquentiellement en utilisant le même facteur d'étalement,
   - les premiers slots de communication étant alloués aux dispositifs qui respectent le critère de coexistence (303),
   - les seconds slots de communication étant alloués aux dispositifs qui ne respectent pas le critère de coexistence (303).

2. Méthode d'allocation de ressources selon la revendication 1 comprenant les étapes de :

   - Trier les dispositifs communicants dans une liste selon la métrique de qualité de lien,
   - Allouer au premier dispositif de la liste un premier slot temporel et un premier facteur d'étalement,
   - Pour chaque autre dispositif de la liste, allouer au dispositif le premier slot temporel disponible en parcourant la super trame dans le sens croissant des temps et des valeurs de facteur d'étalement, pour lequel le dispositif respecte le critère de coexistence avec chacun des autres dispositifs autorisés à communiquer dans un slot temporel ayant un recouvrement temporel avec ledit premier slot temporel disponible.

3. Méthode d'allocation de ressources selon l'une des revendications précédentes dans lequel le système de communications met en œuvre une technique d'étalement de spectre à codes pseudo-orthogonaux, par exemple de type « Chirp Spread Spectrum ».

4. Méthode d'allocation de ressources selon l'une des revendications précédentes dans lequel la métrique de qualité de lien est une métrique de rapport signal à bruit ou de puissance du signal reçu.

5. Méthode d'allocation de ressources selon l'une des revendications précédentes dans lequel le système de communications respecte une technologie de type LoRa™.

6. Méthode d'allocation de ressources selon l'une des revendications précédentes dans lequel le critère de coexistence (303) est déterminé au moyen des étapes de :

   - Calculer une probabilité de coexistence entre deux dispositifs en estimant la probabilité que le rapport signal à interférence soit supérieur à un premier seuil donné, à partir de l' indicateur statistique,
   - Comparer la probabilité de coexistence à un second seuil donné,
   - Conclure à la possible coexistence des deux dispositifs si leur probabilité de coexistence est supérieure audit second seuil.

7. Méthode d'allocation de ressources selon la revendication 6 dans laquelle le premier seuil est un seuil de rapport signal à interférence fonction des facteurs d'étalement des deux dispositifs.

8. Méthode d'allocation de ressources selon l'une des revendications 6 ou 7 dans laquelle l'au moins un indicateur statistique du rapport signal à interférence est une moyenne et un écart type ou une variance.

9. Méthode d'allocation de ressources selon la revendication 8 dans laquelle la distribution statistique du rapport signal à interférence suit une loi normale et la probabilité de coexistence est déterminée en

- Déterminant une approximation de la distribution statistique du rapport signal à interférence à partir de la moyenne, l'écart type et un paramètre caractéristique du niveau de coexistence,
- Comparant ladite approximation au premier seuil.

10. Méthode d'allocation de ressources selon l'une des revendications 8 ou 9 dans laquelle la moyenne du rapport signal à interférence est déterminée en calculant la différence entre les moyennes respectives de la métrique de qualité de lien de deux dispositifs.

11. Méthode d'allocation de ressources selon l'une des revendications 8 à 10 dans laquelle la variance du rapport signal à interférence est déterminée en calculant la somme entre les variances respectives de la métrique de qualité de lien de deux dispositifs.

12. Méthode d'allocation de ressources selon l'une des revendications précédentes comprenant en outre une étape (304) d'allocation d'un canal fréquentiel à chaque dispositif communicant.

13. Programme d'ordinateur comportant des instructions pour l'exécution du procédé selon l'une quelconque des revendications précédentes, lorsque le programme est exécuté par un processeur.

14. Système de communication comprenant un organe d'allocation de ressources configuré pour exécuter la méthode d'allocation de ressources selon l'une quelconque des revendications 1 à 12.

FIG.1

FIG.2

```
                    ┌─────────────────┐
                    │  Mesures métrique│
                    │     qualité      │╮──── 301
                    └─────────────────┘
                             │
                             ▼
                    ┌─────────────────┐
                    │   Détermination  │
                    │       SIR        │╮──── 302
                    └─────────────────┘
                             │
                             ▼
                    ┌─────────────────┐
                    │     Test de      │
                    │   coexistence    │╮──── 303
                    └─────────────────┘
                             │
                             ▼
                    ┌─────────────────┐
                    │  Allocation slots│
                    │   et facteurs    │╮──── 304
                    │   d'étalement    │
                    └─────────────────┘
```

# FIG.3

FIG.4

FIG.5a

FIG.5b

FIG.5c

FIG.6a

FIG.6b

FIG.7a

EP 3 866 531 A1

FIG.7b

EP 3 866 531 A1

FIG.7c

FIG.7d

FIG.7e

Europäisches
Patentamt

European
Patent Office

Office européen
des brevets

**RAPPORT DE RECHERCHE EUROPEENNE**

Numéro de la demande

EP 21 15 4895

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | REYNDERS BRECHT ET AL: "Improving Reliability and Scalability of LoRaWANs Through Lightweight Scheduling", IEEE INTERNET OF THINGS JOURNAL, IEEE, USA, vol. 5, no. 3, 1 juin 2018 (2018-06-01), pages 1830-1842, XP011685086, DOI: 10.1109/JIOT.2018.2815150 * page 1830 - page 1841 * ----- | 1-14 | INV. H04W72/02 H04B1/7105 H04B17/309 H04B1/69 |
| A | TA DUC-TUYEN ET AL: "LoRa-MAB: A Flexible Simulator for Decentralized Learning Resource Allocation in IoT Networks", 2019 12TH IFIP WIRELESS AND MOBILE NETWORKING CONFERENCE (WMNC), IFIP, 11 septembre 2019 (2019-09-11), pages 55-62, XP033640655, DOI: 10.23919/WMNC.2019.8881393 * page 55 - page 61 * ----- | 1-14 | |
| A | GAO WEIFENG ET AL: "Towards Energy-Fairness in LoRa Networks", 2019 IEEE 39TH INTERNATIONAL CONFERENCE ON DISTRIBUTED COMPUTING SYSTEMS (ICDCS), IEEE, 7 juillet 2019 (2019-07-07), pages 788-798, XP033651816, DOI: 10.1109/ICDCS.2019.00083 * page 788 - page 793 * ----- -/-- | 1-14 | **DOMAINES TECHNIQUES RECHERCHES (IPC)** H04W H04B |

Le présent rapport a été établi pour toutes les revendications

| Lieu de la recherche | Date d'achèvement de la recherche | Examinateur |
|---|---|---|
| Berlin | 9 juin 2021 | González Gutiérrez |

CATEGORIE DES DOCUMENTS CITES

X : particulièrement pertinent à lui seul
Y : particulièrement pertinent en combinaison avec un
    autre document de la même catégorie
A : arrière-plan technologique
O : divulgation non-écrite
P : document intercalaire

T : théorie ou principe à la base de l'invention
E : document de brevet antérieur, mais publié à la
    date de dépôt ou après cette date
D : cité dans la demande
L : cité pour d'autres raisons

& : membre de la même famille, document correspondant

EPO FORM 1503 03.82 (P04C02)

page 1 de 2

Europäisches
Patentamt

European
Patent Office

Office européen
des brevets

**RAPPORT DE RECHERCHE EUROPEENNE**

Numéro de la demande

EP 21 15 4895

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| A | ZHOU QIHAO ET AL: "A Novel Rate and Channel Control Scheme Based on Data Extraction Rate for LoRa Networks", 2019 IEEE WIRELESS COMMUNICATIONS AND NETWORKING CONFERENCE (WCNC), IEEE, 15 avril 2019 (2019-04-15), pages 1-6, XP033652196, DOI: 10.1109/WCNC.2019.8885860 * page 1 - page 4 * ----- | 1-14 | |
| A | BYEON SEUNGGYU ET AL: "PcLoRa: Point-coordinating LoRa with new Channel Structure for massive, reliable and low-latency IoT", 2020 INTERNATIONAL CONFERENCE ON INFORMATION NETWORKING (ICOIN), IEEE, 7 janvier 2020 (2020-01-07), pages 596-601, XP033730144, DOI: 10.1109/ICOIN48656.2020.9016433 * page 1 - page 5 * ----- | 1-14 | |

DOMAINES TECHNIQUES
RECHERCHES (IPC)

Le présent rapport a été établi pour toutes les revendications

| Lieu de la recherche | Date d'achèvement de la recherche | Examinateur |
|---|---|---|
| Berlin | 9 juin 2021 | González Gutiérrez |

CATEGORIE DES DOCUMENTS CITES

X : particulièrement pertinent à lui seul
Y : particulièrement pertinent en combinaison avec un
    autre document de la même catégorie
A : arrière-plan technologique
O : divulgation non-écrite
P : document intercalaire

T : théorie ou principe à la base de l'invention
E : document de brevet antérieur, mais publié à la
    date de dépôt ou après cette date
D : cité dans la demande
L : cité pour d'autres raisons

& : membre de la même famille, document correspondant

EPO FORM 1503 03.82 (P04C02)

## RÉFÉRENCES CITÉES DANS LA DESCRIPTION

**Littérature non-brevet citée dans la description**

- **J. HAXHIBEQIRI ; I. MOERMAN ; J. HOEBEKE.** Low Overhead Scheduling of LoRa Transmissions for Improved Scalability. *IEEE Internet of Things Journal,* Avril 2019, vol. 6 (2), 3097-3109
- **ABDELFADEEL, KHALED Q. et al.** FREE - Fine-grained Scheduling for Reliable and Energy Efficient Data Collection in LoRaWAN. *ArXiv abs/1812.05744,* 2018

- **D. CROCE ; M. GUCCIARDO ; S. MANGIONE ; G. SANTAROMITA ; I. TINNIRELLO.** Impact of LoRa Imperfect Orthogonality: Analysis of Link-Level Performance. *IEEE Communications Letters,* Avril 2018, vol. 22 (4), 796-799